# EUROPÄISCHE PATENTSCHRIFT

(11) **EP 3 516 279 B1**
(45) Veröffentlichungstag und Bekanntmachung des Hinweises auf die Patenterteilung: **10.11.2021**
(21) Anmeldenummer: 17780323.6
(22) Anmeldetag: 19.09.2017
(51) Int. Cl.: F16K 17/06, F16K 17/04, F16K 15/00, F16K 15/02

(54) **MINDESTDRUCKVENTIL FÜR EINEN SCHRAUBENKOMPRESSOR FÜR EIN FAHRZEUG, INSBESONDERE EIN NUTZFAHRZEUG**
MINIMUM PRESSURE VALVE FOR A SCREW COMPRESSOR FOR A VEHICLE, IN PARTICULAR A UTILITY VEHICLE
SOUPAPE À SEUIL DE PRESSION DESTINÉE À UN COMPRESSEUR À VIS POUR UN VÉHICULE, EN PARTICULIER UN VÉHICULE UTILITAIRE

(30) Priorität: 21.09.2016 DE 102016011495; 01.03.2017 DE 102017104203
(43) Veröffentlichungstag der Anmeldung: 31.07.2019
(73) Patentinhaber: KNORR-BREMSE Systeme für Nutzfahrzeuge GmbH, 80809 München (DE)
(72) Erfinder: HEBRARD, Gilles, 80809 München (DE); MARESCOT, Jean-Baptiste, 80809 München (DE); MELLAR, Jörg, 80809 München (DE); WEINHOLD, Thomas, 80809 München (DE)
(86) Internationale Anmeldenummer: PCT/EP2017/073593
(87) Internationale Veröffentlichungsnummer: WO 2018/054885

(56) Entgegenhaltungen:
- WO-A1-2014/183173
- US-A- 382 643
- US-A- 382 643
- US-A- 2 727 529
- US-A- 2 727 529
- US-A- 3 123 093
- US-A- 3 123 093
- US-A1- 2011 108 130

## Beschreibung

### Mindestdruckventil für einen Schraubenkompressor für ein Fahrzeug, insbesondere ein Nutzfahrzeug

Die vorliegende Erfindung betrifft ein Mindestdruckventil für einen Kompressor, insbesondere Schraubenkompressor oder Rotary-Vane-Kompressor, für ein Fahrzeug, insbesondere ein Nutzfahrzeug, mit wenigstens einem Gehäuse und mit wenigstens einer im Gehäuse ausgebildeten Ventileinsatzöffnung.

Aus dem Stand der Technik sind bereits Mindestdruckventile für Kompressoren wie z.B. Schraubenkompressoren von Fahrzeugen, insbesondere Nutzfahrzeugen, bekannt. Derartige Schraubenkompressoren werden verwendet, um die notwendige Druckluft für beispielsweise das Bremssystem des Nutzfahrzeugs bereitzustellen.

In diesem Zusammenhang sind insbesondere Öl befüllte Kompressoren, insbesondere auch Schraubenkompressoren bekannt. Das Schmierkonzept derartiger Schraubenkompressoren sieht vor, dass das zur Schmierung der Schrauben notwendige Öl zunächst mit der verdichteten Druckluft transportiert wird. Bevor die Druckluft der Luftaufbereitungseinrichtung zugeführt werden kann, wird das Öl in einer Ölabscheideeinrichtung von der Druckluft getrennt und von dort z.B. dem integrierten Ölvorrat oder den Schrauben des Schraubenkompressors wieder rückgeführt.

Da die Luftaufbereitungseinrichtung in regelmäßigen Intervallen durch Entlüften regeneriert werden muss, wird zu diesem Zweck der Betrieb des Schraubenkompressors (ab einem bestimmten Abschaltdruck) gestoppt. Auch wird der Kompressor bei erreichen des Abschaltdruckes für die Luftbehälter gestoppt werden. Zur Absicherung des Drucks im Schraubenkompressor gegenüber der Luftaufbereitungseinrichtung weist dieser ein Mindestdruckventil auf.

Diesbezüglich zeigt die DE 10 2014 118 267 A1 ein Ventil zur Regulierung eines Fluidstroms, wobei das Ventil ein Gehäuse zur Verbindung eines Fluideintrittskanals mit einem Fluidaustrittskanal aufweist, das eine Ventilkolbenbohrung zur Führung eines Ventilkolbens aufweist, ein darin axial beweglich angeordneter zylindrischer Ventilkolben mit einem an einem vorderen Ende angeordneten Ventilteller, der durch ein Druckmittel gegen einen zwischen Fluideintrittskanal und Fluidaustrittskanal angeordneten Ventilsitz anpressbar ist. Das Einsatzgebiet des Ventils erstreckt sich auf Druckluftanlagen, beispielsweise Drucklufterzeugungsanlagen von Schienenfahrzeugen, insbesondere auf Schraubenkompressoren.

Ferner zeigt die DD 207 560 A5 eine Steuerungsvorrichtung für einen Verdichter, insbesondere eine Schraubenverdichteranlage, mit Öleinspritzung, mit einem in der Druckleitung angeordneten Mindestdruckventil, dessen Ventilkörper auf der Verbraucherseite von einer Druckfeder beaufschlagt ist.

Im Übrigen ist in der DE 28 22 779 A1 ein Rotationsverdichter mit Ölabdichtung gezeigt, der ein Entlastungsventil zum Drosseln oder Absperren des Verdichtereinlasses aufzeigt, wenn der verdichtete Druck einen vorbestimmten Wert übersteigt. Zudem ist ein Mindestdruckventil offenbart, dass einen Auslasskanal verschließt, um ein Rückströmen aus der Druckleitung über einen Auslassraum zu verhindern.

Die DE 31 46 535 A1 offenbart weiter ein Mindestdruckventil in einer Druckleitung eines Kompressors, bei welcher eine Steuerung durch Druckbeaufschlagung des Mindestdruckventils vorgesehen ist, um zu verhindern, dass beim Abschalten des Verdichters Druckluft auch nur kurzzeitig in die Druckleitung austreten kann.

Aus der DE 33 11 055 A1 ist ein mit Öleinspritzung arbeitender Verdichter gezeigt, bei welchem die Möglichkeit geschaffen wird, diesen in einen entlasteten Leerlauf zu schalten und dennoch bei dem Wiedereinsetzen der Druckluftentnahme sofort Druckluft zur Verfügung zu stellen. Um das Zurückschalten des Verdichters aus dem entlasteten Leerlauf auf Last bei Wiedereinsetzen der Druckluftentnahme zu beschleunigen, wird eine an einem Mindestdruckventil in der Druckluftentnahmeleitung angeordnete Abtasteinrichtung vorgesehen.

Weitere Mindestdruckventile, welche im Zusammenhang mit Kompressoren, insbesondere Schraubenkompressoren, eingesetzt werden, sind beispielsweise aus der DE 37 02 652 A1, der DE 73 01 546 U, der DE 80 15 773 U1, der DE 81 34 215 U1, der DE 603 04 555 T2, der DE 10 2006 016 318 A1, der DE 10 2014 118 266 B3 sowie der EP 0 698 738 A2 bekannt.

Derartige Mindestdruckventile werden beispielsweise in einem Auslassbereich von Schraubenkompressoren verbaut, wobei die Mindestdruckventile erst ab einem einstellbaren Druckschwellwert öffnen, so dass beispielsweise eine ordnungsgemäße Schmierung des Schraubenkompressors stattfinden kann. Aufgrund des Unterschieds zwischen der wirksamen pneumatischen Oberfläche eines Ventilkolbens bei geöffnetem bzw. geschlossenem Zustand des Mindestdruckventils sowie aufgrund von Reibungseinflüssen unterscheidet sich der Öffnungsdruck von dem Schließdruck je nach Ausführungsform erheblich. Dadurch kann eine Druckhysterese mit typischen Werten von z.B. ca. 4,5 bis ca. 5 bar bei einem Öffnungsdruck von beispielsweise ca. 10 bar auftreten.

Aus der US 382,643 ist ein Sicherheitsventil bekannt, dass einen in einer Ventilkolbenbohrung verschieblich geführten Ventileinsatz aufweist.

Aus der US 2,727,529 A ist weiter ein Überdruckventil bekannt.

Die US 3,123,093 A offenbart ein Mindestdruckventil für einen Kompressor, bei dem ebenfalls in einer Ventilbohrung ein Ventileinsatz verschieblich geführt ist.

Aus der US 2011/108103 A1 ist ein Druckregelventil bekannt, dass ebenfalls einen federbelasteten Ventileinsatz aufweist, der verschieblich in einer Ventilbohrung geführt ist. Aus der WO 2014/183173 A1 ist weiter ein Mindestdruckventil bekannt, das ebenfalls ein verschieblich geführten federbelasteten Ventileinsatz aufweist.

Während der Regenerierung der Luftaufbereitungseinrichtung kommt es in der Regel zu einem schnellen Druckabfall in der Luftaufbereitungseinrichtung bis der Schließdruck des Mindestdruckventils erreicht ist.

Aufgrund dieses schnellen Druckabfalls und der zuvor genannten Druckhysterese kann Öl zum Kompressorauslass befördert werden, wodurch die Gefahr besteht, dass dieses Öl in einer zu großen Menge den Auslass des Schraubenkompressors verlässt. Folglich kann es zu einer Schädigung oder zu einem Zusetzen von weiteren mit dem Schraubenkompressorauslass verbundenen pneumatischen Bauteilen, wie beispielsweise der Luftaufbereitungseinrichtung, kommen.

Ein weiterer ungewollter Effekt des schnellen Druckabfalls ist ein Aufschäumen des sich im Schraubenkompressor befindlichen Öls, wodurch Schäden insbesondere durch Mangelschmierung an Verschließ ausgesetzten Bauteilen des Schraubenkompressors wie z.B. Lager oder Schrauben entstehen können.

Es ist daher die Aufgabe der vorliegenden Erfindung, ein Mindestdruckventil für einen Schraubenkompressor eines Fahrzeugs, insbesondere eines Nutzfahrzeugs, der eingangs genannten Art in vorteilhafter Weise weiterzubilden, insbesondere dahingehend, dass eine Hysterese zwischen einem Öffnungsdruck und einem Schließdruck des Mindestdruckventils vermindert wird.

Diese Aufgabe wird erfindungsgemäß gelöst durch ein Mindestdruckventil für einen Kompressor, insbesondere Schraubenkompressor oder Rotary-Vane-Kompressor, eines Fahrzeugs, insbesondere eines Nutzfahrzeugs, mit den Merkmalen des Anspruchs 1. Danach ist vorgesehen, dass Mindestdruckventil für einen Schraubenkompressor für ein Fahrzeug, insbesondere ein Nutzfahrzeug, mit wenigstens einem Gehäuse, mit wenigstens einer Ventileinsatzöffnung, die im Gehäuse ausgebildet ist, mit wenigstens einem Ventileinsatz, der in die Ventileinsatzöffnung eingesetzt ist und wenigstens eine Ventilkolbenbohrung aufweist, mit wenigstens einem Ventilkolben, der mit wenigstens einem Ventilkolbenabschnitt im Ventileinsatz in der Ventilkolbenbohrung verschieblich geführt ist, mit wenigstens einem Fluideintrittskanal und mit wenigstens einem Fluidaustrittskanal versehen ist, wobei der Fluideintrittskanal an seinem dem Ventilkolben zugewandten Ende wenigstens einen Ventilsitz aufweist, gegen den der Ventilkolben zum Schließen des Mindestdruckventils anstellbar ist, derart, dass der Fluideintrittskanal und der Fluidaustrittskanal in einer Schließstellung des Ventilkolbens voneinander getrennt sind, wobei der Ventilsitz einen Ventilsitzdurchmesser dA aufweist, wobei der Ventilkolbenabschnitt einen Ventilkolbenabschnittsdurchmesser dB aufweist und wobei das Verhältnis Ventilkolbenabschnittdurchmesser dB zu Ventilsitzdurchmesser dA zwischen ca. 0,6 und ca. 0,95, nämlich zwischen ca. 0,7 und ca. 0,9, besonders bevorzugt zwischen ca. 0,8 und ca. 0,85, liegt.

Die Erfindung basiert auf dem Grundgedanken, ein Mindestdruckventil für einen Kompressor, insbesondere Schraubenkompressor oder Rotary-Vane-Kompressor, vorzusehen, dessen Ventilsitzdurchmesser ein spezifisches Verhältnis zu einem Durchmesser eines Ventilkolbenabschnitts aufweist, um die Druckhysterese des Mindestdruckventils zu minimieren. Die Druckhysterese entsteht zum einen aufgrund des Unterschieds zwischen dem Öffnungs- und Schließdruck, der aus unterschiedlichen pneumatisch wirksamen Oberflächen des Ventilkolbens bei geöffnetem bzw. geschlossenem Zustand resultiert. Zum anderen wird die Druckhysterese durch Reibungseinflüsse des Ventilkolbenabschnitts beeinflusst, der in der Ventilkolbenbohrung im Ventileinsatz verschieblich geführt ist. Überraschenderweise haben die Erfinder in diesem Zusammenhang festgestellt, dass sich die Hysterese des Mindestdruckventils bei einem Verhältnis Ventilkolbenabschnittsdurchmesser dB zu Ventilsitzdurchmesser dA von ca. 0,82 (dB/dA = ca. 0,82) signifikant auf ca. 0,2 bar verringern lässt. Somit ist der Ventilkolbenabschnittsdurchmesser dB kleiner als Ventilsitzdurchmesser dA ausgebildet und zudem ausschließlich in der Ventilkolbenbohrung (d.h. es werden zusätzliche Reibflächen vermieden) des Ventileinsatzes axial verschieblich geführt. Durch diese strukturelle Ausgestaltung kann eine zusätzliche Minimierung der Haft- und Gleitreibung des Ventilkolbens erreicht werden, was sich zusätzlich positiv auf die Druckhysterese des Mindestdruckventils auswirkt, welche somit praktisch vernachlässigbar wird.

Im Übrigen ist der Ventilkolbenabschnitt, der im Ventileinsatz in der Ventilkolbenbohrung verschieblich geführt ist, ein freier Ventilkolbenendabschnitt. Der verschieblich geführte Ventilkolbenabschnitt ist deshalb als freier Ventilkolbenendabschnitt ausgestaltet, da sich dadurch der strukturelle Aufbau des Mindestdruckventils vereinfacht. Der freie Ventilkolbenendabschnitt ist so zu verstehen, dass dieser sich an demjenigen, insbesondere freien, Ende des Ventilkolbenabschnitts befindet, das nicht einstückig an den Ventilkolben anschließt. Insbesondere vereinfacht sich der strukturelle Aufbau des Ventileinsatzes sowie dessen Fertigung und Montage.

Weiter ist vorstellbar, dass zwischen dem freien Ventilkolbenendabschnitt und der Ventilkolbenbohrung wenigstens eine Dichtung, insbesondere eine Radialdichtung, vorgesehen ist. Die Radialdichtung ist für eine zuverlässige Funktionserfüllung des Mindestdruckventils von Vorteil, da sie insbesondere bei sich radial und relativ zueinander bewegenden pneumatischen Bauteilen (wie im vorliegenden Falle der Ventilkolben und der Ventileinsatz) eine sehr gute Dichtwirkung erzeugt. Zudem ermöglicht die Verwendung der Radialdichtung eine einfachere Konstruktion von Ventilkolbenendabschnitt und Ventilkolbenbohrung sowie eine vereinfachte Montage.

Zudem ist denkbar, dass der freie Ventilkolbenendabschnitt eine zylindrische Form aufweist und in dessen Mantelfläche die Dichtung, insbesondere die Radialdichtung, angeordnet ist, die gegen die Ventilkolbenbohrung angedrückt ist. Aufgrund der zylindrischen Form des freien Ventilkolbenendabschnitts ist dieser besonders einfach mit den gängigen Fertigungsverfahren (z. B. Drehen) herstellbar. Die Anordnung der Radialdichtung in der Mantelfläche des freien Ventilkolbenabschnitts ist besonders wegen der einfacheren Montage der Radialdichtung von Vorteil. Die Radialdichtung kann in Form eines O-Rings und/oder eines Airzet-Rings ausgestaltet sein. Allerdings sind auch andere Radialdichtkonzepte in diesem Zusammenhang denkbar. Dabei kann die Radialdichtung in die Mantelfläche des Ventilkolbenendabschnitts aufgesteckt, aufgezogen, geklemmt, geschraubt, geklipst, geklebt und/oder aufvulkanisiert sein.

Außerdem kann vorgesehen sein, dass der Ventilsitz eine umlaufende, insbesondere eine geschlossen umlaufende, Erhebung aufweist. Die Erhebung des Dichtsitzes erlaubt insbesondere eine verbesserte Dichtwirkung. Schließlich kann an den zu dichtenden Bauteilen durch die Erhebung die spezifische Flächenpressung in einfacher und vorteilhafter Weise erhöht werden, wodurch sich auch die Dichtwirkung erhöht.

Des Weiteren ist vorstellbar, dass der Ventilkolben in seiner dem Fluideintrittskanal zugewandten Stirnfläche wenigstens eine Dichtung, insbesondere eine Axialdichtung, aufweist, die in der Schließstellung des Ventilkolbens gegen den Ventilsitz angestellt ist. Der Einsatz einer Axialdichtung ist insbesondere dann vorteilhaft, wenn es zu einer Anstellung zweier wenigstens temporär zu dichtender und sich in Ruhe zueinander befindenden pneumatischen Bauteilen (in diesem Fall: Ventilkolben und Fluideintrittskanal) kommt. Da die Axialdichtung im vorliegenden Anwendungsfall während der Relativbewegung von Kolben und Ventilsitz diese nicht gegeneinander abdichten muss, sondern lediglich in einem angestellten Zustand des Kolbens, kann die Axialdichtung derart ausgelegt werden, dass sie eine sehr gute Dichtwirkung erzeugt. Dabei kann die Axialdichtung in der Stirnfläche aufgesteckt, aufgezogen, geschraubt, geklipst, geklemmt, geklebt und/oder aufvulkanisiert sein. Andere in diesem Zusammenhang geeignete Befestigungsmöglichkeiten sind ebenfalls denkbar. Die Axialdichtung ist im Wesentlichen ringförmig ausgebildet. Allerdings sind auch andere Formgebungen der Axialdichtung (wie z.B. ein O-Ring, Membrandichtung oder ein Sombrero) vorstellbar.

Ferner weist ein Ende der Ventilkolbenbohrung einen axialen Anschlag auf, mittels dessen die axiale Verschiebung des freien Ventilkolbenendabschnitts und des Ventilkolbens begrenzbar ist. Das Vorsehen der Ventilkolbenbohrung mit einem axialen Anschlag ist insbesondere deshalb von großer Bedeutung, da sich so strukturell in sehr einfacher Art und Weise einerseits die axiale Führung und andererseits die axiale Begrenzung des Ventilkolben in lediglich einem Bauteil und insbesondere mit nur einer Führungsbohrung (nämlich der Ventilkolbenbohrung) umsetzen lässt. Im Übrigen ist für den zuverlässigen Betrieb des Mindestdruckventil ein geometrisch definierter Anschlag des Ventilkolbens bzw. des Ventilkolbenendabschnitts zwingend erforderlich.

Der Anschlag kann auch durch Fahren der Feder auf (einen) Block geschehen. Die Feder könnte sich auch in einer bzw. der Ventilkolbenbohrung befinden. Dann kann der Anschlag auch zwischen Federansatzflächen dargestellt werden.

Darüber hinaus kann vorgesehen sein, dass zwischen einer Federansatzfläche des Ventilkolbens und einer Federansatzfläche des Ventileinsatzes ein Federelement, insbesondere eine Schraubenfeder, angeordnet ist. Das Federelement in Form der Schraubenfeder ist für die Funktionserfüllung des vorliegenden Mindestdruckventils deshalb vorteilhaft, da sie im eingebauten und montierten Zustand für die Anstellung des Ventilkolbens gegen den Ventilsitz am Ende des Fluidkanals sowie für den öffnungs- und Schließdruck verantwortlich ist. Zudem ist der Einsatz unter den radial beengten Platzverhältnissen innerhalb der Ventileinsatzöffnung besonders von Vorteil, da es sich bei einer Schraubenfeder um ein radial kompaktes, längliches Maschinenelement handelt.

Weiterhin ist vorstellbar, dass zwischen dem Ventileinsatz und der Ventileinsatzöffnung des Gehäuses wenigstens eine Dichtung, insbesondere eine Radialdichtung, vorgesehen ist. Wie bereits vorstehend beschrieben, ist der Ventileinsatz lediglich in die Ventileinsatzöffnung eingesetzt, so dass die unter Betriebsdruck stehende Ventileinsatzöffnung zwingend gegenüber der Atmosphäre abgedichtet werden muss. Zudem stehen im eingesetzten Zustand des Ventileinsatzes lediglich die Radialflächen von Ventileinsatz und Ventileinsatzöffnung in Kontakt. Daher ist es im vorliegenden Fall besonders einfach und vorteilhaft, zwischen Ventileinsatz und Ventileinsatzöffnung eine weitere Radialdichtung vorzusehen.

Zusätzlich ist denkbar, dass der Ventileinsatz eine zylindrische Außenkontur aufweist und in dessen Mantelfläche die Dichtung, insbesondere die Radialdichtung, angeordnet ist, die im montierten Zustand des Mindestdruckventils gegen die Ventileinsatzöffnung angedrückt ist. Aufgrund der zylindrischen Außenkontur des Ventileinsatzes kann dieser sehr einfach mit den gängigen Fertigungsverfahren (z. B. Drehen) kostengünstig und genau gefertigt werden. Außerdem bietet sich die Anordnung der Radialdichtung in der Mantelfläche des Ventileinsatzes insbesondere deshalb an, um die Montage der Radialdichtung zu vereinfachen.

Ferner kann vorgesehen sein, dass der Ventileinsatz eine Entlüftungsbohrung aufweist, die sich von einer Außenoberfläche des Ventileinsatzes zu dem Ende der Ventilkolbenbohrung erstreckt, das den axialen Anschlag aufweist. Im montierten Zustand des Mindestdruckventils ist grundsätzlich innerhalb der Ventilkolbenbohrung ein im Wesentlichen zylindrischer Zwischenraum ausgebildet, der von einer Stirnseite des Ventilkolbenendabschnitts, dem Ende der Ventilkolbenbohrung sowie der Ventilkolbenbohrung räumlich begrenzt wird. Im Laufe des Betriebs des Mindestdruckventils wird dieser zuvor angesprochene zylindrische Zwischenraum kontinuierlich mit einem gewissen Anteil des Betriebsdrucks beaufschlagt, da die Radialdichtung des Ventilkolbenendabschnitts keine absolute Dichtheit gewährleisten kann. Würde dieser zylindrische Zwischenraum nicht kontinuierlich (z. B. im vorliegenden Fall durch die Entlüftungsbohrung) entlüftet werden, würde er wie eine Art Gasfeder auf das Ende des Ventilkolbens wirken und so insbesondere die Druckhysterese des Mindestdruckventils vergrößern, anstatt deren Einfluss zu minimieren.

Auch ist vorstellbar, dass in einer Oberfläche der Ventileinsatzöffnung ein axialer Anschlag, insbesondere ein axialer Sicherungsring oder ein Schraubdeckel, versehen ist, gegen den der Ventileinsatz im montierten Zustand des Mindestdruckventils axial angestellt ist. Wie bereits vorstehend erläutert, wird der Ventileinsatz lediglich in die Ventileinsatzöffnung eingesetzt, wodurch das Gehäuse des Mindestdruckventils innerhalb der Ventileinsatzöffnung zur Gewährleistung der Funktion einen definierten axialen Anschlag aufweisen muss. Der axiale Anschlag in Form des axialen Sicherungsrings ist besonders wegen seiner sehr einfachen Montage und Zugänglichkeit im vorliegenden Fall sowie aufgrund der vertretbaren axialen Kräfte von Vorteil.

Überdies ist denkbar, dass das Gehäuse des Mindestdruckventils als einstückiger Bestandteil eines Gehäuses des Schraubenkompressors ausgebildet ist. Die einstückige Verknüpfung des Gehäuses des Mindestdruckventils mit einem Gehäuse des Schraubenkompressors hat in jedem Fall eine Vereinfachung des strukturellen Aufbaus des Mindestdruckventils und des Gehäuses des Schraubenkompressors zur Folge. Da auf das separate Gehäuse des Mindestdruckventils verzichtet werden kann, verringert sich infolgedessen zusätzlich der Materialbedarf sowie die Montage- und Fertigungskosten sowie die Teilezahl. Im Übrigen kann die Fertigung insbesondere der Ventileinsatzöffnung vereinfacht werden, da aufgrund des strukturellen Aufbaus eine sehr gute äußerliche Zugänglichkeit des Gehäuses des Mindestdruckventils bzw. des Schraubenkompressors realisierbar ist.

Außerdem kann vorgesehen sein, dass das Mindestdruckventil als Eck-Mindestdruckventil ausgeführt ist. Die Ausführung als Eck-Mindestdruckventil ist insbesondere deshalb von Vorteil, da das gesamte Mindestdruckventil nicht axial durchströmt wird und sich so der konstruktive Aufwand erheblich verringern lässt und sich ferner die damit verbundenen Mehrkosten vermeiden lassen. Aufgrund des deutlich einfacheren strukturellen Aufbaus wird zudem die Funktionssicherheit erhöht.

Weitere Einzelheiten und Vorteile der Erfindung sollen nun anhand eines in den Figuren gezeigten Ausführungsbeispiels erläutert werden.

Es zeigen:
- Fig. 1: eine schematische Schnittdarstellung eines Ausführungsbeispiels eines Schraubenkompressors mit einem erfindungsgemäßen Mindestdruckventil; Fig. 2 eine schematische Querschnittsansicht eines Ausführungsbeispiels eines erfindungsgemäßen Mindestdruckventils in einer Schließstellung; und
- Fig. 3: eine schematische Querschnittsansicht des Ausführungsbeispiels des erfindungsgemäßen Mindestdruckventils gemäß Fig. 2 in einer geöffneten Stellung.

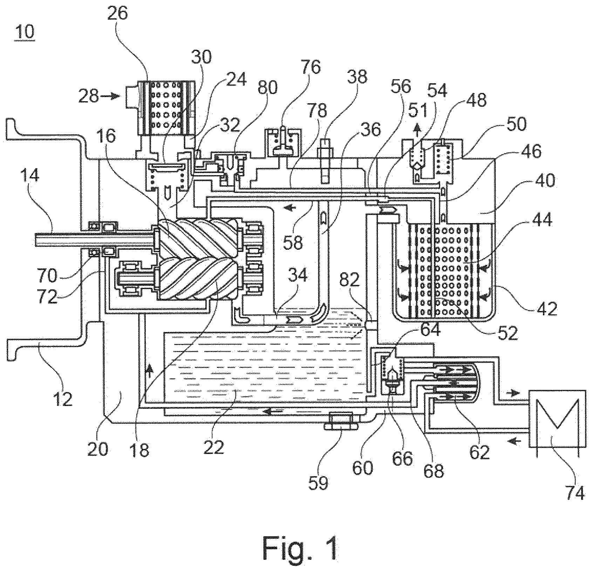

**Fig. 1** zeigt in einer schematischen Schnittdarstellung einen Schraubenkompressor 10, der ein erfindungsgemäßes Mindestdruckventil 50 aufweist.

Der Schraubenkompressor 10 weist einen Befestigungsflansch 12 zur mechanischen Befestigung des Schraubenkompressors 10 an einem hier nicht näher gezeigten Antrieb in Form eines Elektromotors auf.

Gezeigt ist jedoch die Eingangswelle 14, über die das Drehmoment vom Elektromotor auf eine der beiden Schrauben 16 und 18, nämlich die Schraube 16 übertragen wird.

Die Schraube 18 kämmt mit der Schraube 16 und wird über diese angetrieben.

Der Schraubenkompressor 10 weist ein Gehäuse 20 auf, in dem die wesentlichen Komponenten des Schraubenkompressors 10 untergebracht sind.

Das Gehäuse 20 ist mit Öl 22 befüllt.

Lufteingangsseitig ist am Gehäuse 20 des Schraubenkompressors 10 ein Einlassstutzen 24 vorgesehen.

Der Einlassstutzen 24 ist dabei derart ausgebildet, dass an ihm ein Luftfilter 26 angeordnet ist.

Außerdem ist radial am Lufteinlassstutzen 24 ein Lufteinlass 28 vorgesehen.

Im Bereich zwischen Einlassstutzen 24 und der Stelle, an dem der Einlassstutzen 24 am Gehäuse 20 ansetzt, ist ein federbelasteter Ventileinsatz 30 vorgesehen, hier als Axialdichtung ausgeführt.

Dieser Ventileinsatz 30 dient als Rückschlagventil.

Stromabwärts des Ventileinsatzes 30 ist ein Luftzuführkanal 32 vorgesehen, der die Luft den beiden Schrauben 16, 18 zuführt.

Ausgangsseitig der beiden Schrauben 16, 18 ist ein Luftauslassrohr 34 mit einer Steigleitung 36 vorgesehen.

Im Bereich des Endes der Steigleitung 36 ist ein Temperaturfühler 38 vorgesehen, mittels dessen die Öltemperatur überwachbar ist.

Weiter vorgesehen ist im Luftauslassbereich ein Halter 40 für ein Luftentölelement 42.

Der Halter 40 für das Luftentölelement weist im montierten Zustand im dem Boden zugewandten Bereich (wie auch in Fig. 1 gezeigt) das Luftentölelement 42 auf.

Weiter vorgesehen ist im Inneren des Luftentölelements 42 ein entsprechendes Filtersieb bzw. bekannte Filter- und Ölabscheidevorrichtungen 44, die nicht näher im Einzelnen spezifiziert werden.

Im zentralen oberen Bereich, bezogen auf den montierten und betriebsfertigen Zustand (also wie in Fig. 1 gezeigt), weist der Halter für das Luftentölelement 40 eine Luftausgangsöffnung 46 auf, die zu einem Rückschlagventil 48 und einem Mindestdruckventil 50 führen.

Das Rückschlagventil 48 und das Mindestdruckventil 50 können auch in einem gemeinsamen, kombinierten Ventil ausgebildet sein.

Nachfolgend des Rückschlagventils 48 ist der Luftauslass 51 vorgesehen.

Der Luftauslass 51 ist mit entsprechend bekannten Druckluftverbrauchern in der Regel verbunden.

Um das im Luftentölelement 42 befindliche und abgeschiedene Öl 22 wieder in das Gehäuse 20 zurückzuführen, ist eine Steigleitung 52 vorgesehen, die ausgangs des Halters 40 für das Luftentölelement 42 beim Übertritt in das Gehäuse 20 ein Filter- und Rückschlagventil 54 aufweist.

Stromabwärts des Filter- und Rückschlagventils 54 ist in einer Gehäusebohrung eine Düse 56 vorgesehen.

Die Ölrückführleitung 58 führt zurück in etwa den mittleren Bereich der Schraube 16 oder der Schraube 18, um dieser wieder Öl 22 zuzuführen.

Innerhalb des im montierten Zustand befindlichen Bodenbereichs des Gehäuses 20 ist eine Ölablassschraube 59 vorgesehen.

Über die Ölablassschraube 59 kann eine entsprechende Ölablauföffnung geöffnet werden, über die das Öl 22 abgelassen werden kann.

Im unteren Bereich des Gehäuses 20 ist auch der Ansatz 60 vorhanden, an dem der Ölfilter 62 befestigt wird.

Über einen Ölfiltereinlasskanal 64, der im Gehäuse 20 angeordnet ist, wird das Öl 22 zunächst zu einem Thermostatventil 66 geleitet.

Anstelle des Thermostatventils 66 kann eine Steuerungs- und/oder Regelungseinrichtung vorgesehen sein, mittels derer die Öltemperatur des im Gehäuse 20 befindlichen Öls 22 überwachbar und auf einen Sollwert einstellbar ist.

Stromabwärts des Thermostatventils 66 ist sodann der Öleinlass des Ölfilters 62, der über eine zentrale Rückführleitung 68 das Öl 22 wieder zurück zur Schraube 18 oder zur Schraube 16, aber auch zum ölgeschmierten Lager 70 der Welle 14 führt.

Im Bereich des Lagers 70 ist auch eine Düse 72 vorgesehen, die im Gehäuse 20 im Zusammenhang mit der Rückführleitung 68 vorgesehen ist.

Der Kühler 74 ist am Ansatz 60 angeschlossen.

Im oberen Bereich des Gehäuses 20 (bezogen auf den montierten Zustand) befindet sich ein Sicherheitsventil 76, über das ein zu großer Druck im Gehäuse 20 abgebaut werden kann.

Vor dem Mindestdruckventil 50 befindet sich eine Bypassleitung 78, die zu einem Entlastungsventil 80 führt.

Über dieses Entlastungsventil 80, das mittels einer Verbindung mit der Luftzuführung 32 angesteuert wird, kann Luft in den Bereich des Lufteinlasses 28 zurückgeführt werden.

In diesem Bereich können ein nicht näher gezeigtes Entlüftungsventil und auch eine Düse (Durchmesserveringerung der zuführenden Leitung) vorgesehen sein.

Darüber hinaus kann ungefähr auf Höhe der Leitung 34 in der Außenwand des Gehäuses 20 ein Öllevelsensor 82 vorgesehen sein.

Dieser Öllevelsensor 82 kann beispielsweise ein optischer Sensor sein und derart beschaffen und eingerichtet, dass anhand des Sensorsignals erkannt werden kann, ob der Ölstand im Betrieb oberhalb des Öllevelsensors 82 ist oder ob der Öllevelsensor 82 frei liegt und hierdurch der Ölstand entsprechend gefallen ist.

Im Zusammenhang mit dieser Überwachung kann auch eine Alarmeinheit vorgesehen sein, die eine entsprechende Fehlermeldung oder Warnmeldung an den Nutzer des Systems ausgibt bzw. weiterleitet.

Die Funktion des in Fig. 1 gezeigten Schraubenkompressors 10 ist dabei wie folgt:
Luft wird über den Lufteinlass 28 zugeführt und gelangt über das Rückschlagventil 30 zu den Schrauben 16, 18, wo die Luft komprimiert wird.

Das komprimierte Luft-Öl-Gemisch, das mit einem Faktor zwischen 5- bis 16facher Komprimierung nach den Schrauben 16 und 18 durch die Auslassleitung 34 über das Steigrohr 36 aufsteigt, wird direkt auf den Temperaturfühler 38 geblasen.

Die Luft, die noch teilweise Ölpartikel trägt, wird sodann über den Halter 40 in das Luftentölelement 42 geführt und gelangt, sofern der entsprechende Mindestdruck erreicht wird, in die Luftauslassleitung 51.

Das im Gehäuse 20 befindliche Öl 22 wird über den Ölfilter 62 und ggf. über den Wärmetauscher 74 auf Betriebstemperatur gehalten.

Sofern keine Kühlung notwendig ist, wird der Wärmetauscher 74 nicht verwendet und ist auch nicht zugeschaltet.

Die entsprechende Zuschaltung erfolgt über das Thermostatventil 68. Nach der Aufreinigung im Ölfilter 64 wird über die Leitung 68 Öl der Schraube 18 oder der Schraube 16, aber auch dem Lager 72 zugeführt.

Die Schraube 16 oder die Schraube 18 wird über die Rückführleitung 52, 58 mit Öl 22 versorgt, hier erfolgt die Aufreinigung des Öls 22 im Luftentölelement 42.

Über den nicht näher gezeigten Elektromotor, der sein Drehmoment über die Welle 14 auf die Schraube 16 überträgt, die wiederum mit der Schraube 18 kämmt, werden die Schrauben 16 und 18 des Schraubenkompressors 10 angetrieben.

Über das nicht näher gezeigte Entlastungsventil 80 wird sichergestellt, dass im Bereich der Zuleitung 32 nicht der hohe Druck, der im Betriebszustand beispielsweise ausgangsseitig der Schrauben 16, 18 herrscht, eingesperrt werden kann, sondern dass insbesondere beim Anlaufen des Kompressors im Bereich der Zuleitung 32 stets ein niedriger Eingangsdruck, insbesondere Atmosphärendruck, besteht.

Andernfalls würde mit einem Anlaufen des Kompressors zunächst ein sehr hoher Druck ausgangsseitig der Schrauben 16 und 18 entstehen, der den Antriebsmotor überlasten würde.

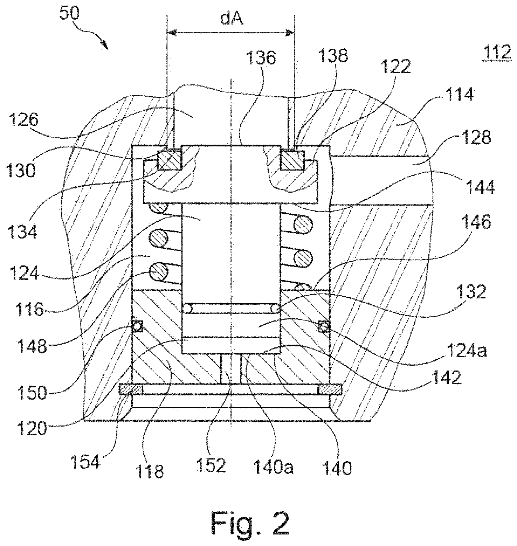

Fig. 2 zeigt eine schematische Querschnittsansicht eines Ausführungsbeispiels eines erfindungsgemäßen Mindestdruckventils 50 für einen Schraubenkompressor 112 für ein Nutzfahrzeug in einer Schließstellung.

Grundsätzlich kann ein derartiges Mindestdruckventil 50 auch im Zusammenhang mit einem sog. Rotary-Vane-Kompressor eingesetzt werden.

Das Mindestdruckventil 50 weist ein (Ventil-)Gehäuse 114 sowie eine Ventileinsatzöffnung 116 auf, die im Gehäuse 114 ausgebildet ist.

Die Ventileinsatzöffnung 116 ist als zylindrische Einsenkbohrung mit einem offenen und mit einem teilweise geschlossenen Ende in das Gehäuse 114 eingebracht.

Das offene Ende ist dem teilweise geschlossenen Ende gegenüberliegend angeordnet.

Weiter weist das Mindestdruckventil 50 einen Ventileinsatz 118 auf, der in die Ventileinsatzöffnung 116 eingesetzt ist.

Der Ventileinsatz 118 weist im Wesentlichen einen U-förmigen Querschnitt sowie eine zylindrische Außenkontur auf und ist rotationssymmetrisch ausgebildet.

Ferner weist der Ventileinsatz 118 in dessen montiertem Zustand eine äußere plane Stirnseite sowie eine innere plane Stirnseite auf, welche den Ventileinsatz 118 axial begrenzen.

Die Ventileinsatzöffnung 116 und der Ventileinsatz 118 sind koaxial zueinander ausgerichtet.

Ferner weist der Ventileinsatz 118 eine Ventilkolbenbohrung 120 auf.

Die Ventilkolbenbohrung 120 ist als zylindrische und mittig angeordnete Einsenkbohrung senkrecht in die innere plane Stirnseite des Ventileinsatzes 118 eingebracht.

Die Ventilkolbenbohrung 120 wiederum weist ein offenes sowie ein teilweise geschlossenes Ende auf.

Im Übrigen weist das Mindestdruckventil 50 einen Ventilkolben 122 auf, der zudem einen Ventilkolbenabschnitt 124 umfasst.

Der Ventilkolben 120 ist im Wesentlichen als scheibenartiger Zylinder ausgebildet.

Gemäß Fig. 2 ist das Mindestdruckventil 50 in einer Schließstellung des Kolbens 122 gezeigt.

Der Ventilkolbenabschnitt 124 erhebt sich aus einer dem Ventileinsatz 118 zugewandten Stirnseite des Ventilkolbens 122.

Der Ventilkolbenabschnitt 124 ist als länglicher Zylinder ausgebildet und ist mit dem Ventilkolben 122 einstückig und koaxial verbunden.

Der Ventilkolbenabschnitt 124 ist zudem im Ventileinsatz 118 in der Ventilkolbenbohrung 120 axial verschieblich geführt.

Ferner weist das Mindestdruckventil 50 einen Fluideintrittskanal 126 sowie einen Fluidaustrittskanal 128 auf.

Das Fluid ist Luft bzw. ein Luft-/Ölgemisch.

Der Fluideintrittskanal 126 ist als Bohrung im Gehäuse 114 ausgebildet und mündet durch das teilweise geschlossene Ende in die Ventileinsatzöffnung 116.

Eine Mittelachse des Fluideintrittskanals 126 sowie eine Mittelachse der Ventileinsatzöffnung 116 sind im Wesentlichen koaxial zueinander ausgerichtet.

Der Fluidaustrittskanal 128 ist ebenfalls als Bohrung im Gehäuse 114 ausgebildet und mündet radial in die Ventileinsatzöffnung 116.

Eine Mittelachse des Fluidaustrittskanals 128 ist im Wesentlichen senkrecht zu der Mittelachse der Ventileinsatzöffnung 116 ausgerichtet.

Der Fluideintrittskanal 126 weist zudem an seinem dem Ventilkolben 122 zugewandten Ende einen Ventilsitz 130 auf.

Dabei ist der Ventilsitz 130 im teilweise geschlossenen Ende der Ventileinsatzöffnung 116 im Gehäuse 114 ausgebildet.

Der Ventilkolben 122 ist zum Schließen des Mindestdruckventils 50 gegen den Ventilsitz 130 anstellbar.

Im Übrigen weist der Ventilsitz 130 einen Ventilsitzdurchmesser dA auf.

Zudem weist der Ventilkolbenabschnitt 124 einen Ventilkolbenabschnittsdurchmesser dB auf.

Das Verhältnis Ventilkolbenabschnittsdurchmesser dB zu Ventilsitzdurchmesser dA liegt zwischen ca. 0,7 und ca. 0,9 (dB/dA = ca. 0,7 ... ca. 0,9).

Besonders bevorzugt liegt das Verhältnis Ventilkolbenabschnittsdurchmesser dB zu Ventilsitzdurchmesser dA zwischen ca. 0,8 und ca. 0,85 (dB/dA = ca.0,8 ... ca. 0,85).

Der Ventilkolbenabschnitt 124, der im Ventileinsatz 118 in der Ventilkolbenbohrung 120 verschieblich geführt ist, ist zudem ein freier Ventilkolbenendabschnitt 124a.

Zwischen dem freien Ventilkolbenendabschnitt 124a und der Ventilkolbenbohrung 120 ist eine Radialdichtung 132 vorgesehen.

Der freie Ventilkolbenendabschnitt 124a weist eine zylindrische Form auf.

In der Mantelfläche des freien Ventilkolbenendabschnitts 124a ist die Radialdichtung 132 angeordnet, die gegen die Ventilkolbenbohrung 120 angedrückt ist.

Zudem weißt die Mantelfläche des freien Ventilkolbenendabschnitts 124a, die sich innerhalb der Ventilkolbenbohrung 120 befindet, eine radial durchgängig umlaufende Aufnahmenut auf, in welcher die Radialdichtung 132 angeordnet ist.

Die Radialdichtung 132 ist als O-Ring aus einem Elastomer, insbesondere Gummi, ausgebildet.

Der Ventilsitz 130 weist ferner eine geschlossen umlaufende Erhebung 134 auf.

Die Erhebung 134 ist im Wesentlichen als wenigstens teilweise ausgebildeter Torus ausgeformt.

Der wenigstens teilweise ausgebildete Torus ist mit seiner planen Oberfläche am Ende des Fluideintrittskanals 126 im Gehäuse 114 auf das teilweise geschlossene Ende der Ventileinsatzöffnung 116 angesetzt.

Der Ventilkolben 122 weist in seiner dem Fluideintrittskanal 126 zugewandten Stirnseite 136 eine Axialdichtung 138 auf, die in der Schließstellung des Ventilkolbens 122 gegen den Ventilsitz 130 angestellt ist.

Der Ventilsitzdurchmesser dA ist insofern geringfügig größer als der Durchmesser des Fluideintrittskanals 126.

Die Axialdichtung 138 ist ringförmig ausgebildet und in einer dem Fluideintrittskanal 126 zugewandten Stirnseite 136 des Ventilkolben 122 eingebrachten Ringnut angeordnet.

Die Axialdichtung 136 ist aus einem Elastomer, insbesondere Gummi, ausgebildet.

Ferner weist ein Ende 140 der Ventilkolbenbohrung 120 einen axialen Anschlag 142 auf.

Der Anschlag kann auch durch Fahren der Feder auf (einen) Block geschehen. Die Feder könnte sich auch in der Ventilkolbenbohrung 120 befinden. Dann kann der Anschlag auch zwischen der Federansatzfläche 144 und der Federansatzfläche 146 dargestellt werden.

Das Ende 140 der Ventilkolbenbohrung 120 ist als teilweise geschlossenes Ende 140a ausgebildet.

Der axiale Anschlag 142 ist innerhalb des teilweise geschlossenen Endes 140a als ringförmige axiale Begrenzungsfläche ausgebildet.

Ferner ist zwischen einer Federansatzfläche 144 des Ventilkolbens 122 und einer Federansatzfläche 146 des Ventileinsatzes 118 eine Schraubenfeder 148 angeordnet.

Die Federansatzfläche 144 des Ventilkolbens 122 ist dabei als plane äußere Ringfläche an der dem Ventileinsatz 118 zugewandten Stirnseite des Ventilkolbens 122 ausgebildet und umgibt radial ein befestigtes Ende des Ventilkolbenabschnitts 124.

Die Federansatzfläche 146 des Ventileinsatzes 118 ist als äußere Ringfläche der inneren Stirnseite des Ventileinsatzes 118 ausgebildet und umgrenzt radial das offene Ende der Ventilkolbenbohrung 120.

Zusätzlich ist zwischen dem Ventileinsatz 118 und der Ventileinsatzöffnung 116 des Gehäuses 114 eine Radialdichtung 150 vorgesehen.

Die Radialdichtung 150 ist in der Mantelfläche der zylindrischen Außenkontur des Ventileinsatzes 118 angeordnet, und ist im montierten Zustand des Mindestdruckventils 50 gegen die Ventileinsatzöffnung 116 angedrückt.

Die zylindrische Außenkontur des Ventileinsatzes 118 weist eine durchgängig verlaufende Ringnut auf, in welcher die Radialdichtung 150 angeordnet ist.

Die Radialdichtung 150 ist als O-Ring aus einem Elastomer, insbesondere Gummi, ausgebildet.

Der Ventileinsatz 118 weist zudem eine Entlüftungsbohrung 152 auf, die sich von einer Außenoberfläche des Ventileinsatzes 118 zu dem teilweise geschlossenen Ende 140a der Ventilkolbenbohrung 120 erstreckt.

Die Entlüftungsbohrung 152 ist als mittige, kreisrunde und koaxiale Durchgangsbohrung im Ventileinsatz 118 ausgebildet.

In einer Oberfläche der Ventileinsatzöffnung 116 ist ein axialer Sicherungsring 154 versehen, gegen den der Ventileinsatz 118 in dessen montierten Zustand axial angestellt ist.

Der Ventileinsatz 118 ist in dessen montiertem Zustand mittels der seiner äußeren Stirnseite gegen den Sicherungsring 154 axial angestellt.

Innerhalb der radialen Oberfläche der Ventileinsatzöffnung 118 ist in der Nähe des offenen Endes der Ventileinsatzöffnung 118 eine geschlossen radial umlaufende Aufnahmenut eingebracht, in welcher der Sicherungsring 154 angeordnet ist.

Das Gehäuse 114 des Mindestdruckventils 50 ist als einstückiger Bestandteil eines Gehäuses 20 des Schraubenkompressors 112 ausgebildet.

Das Mindestdruckventil 50 ist zudem als Eck-Mindestdruckventil 50 ausgebildet.

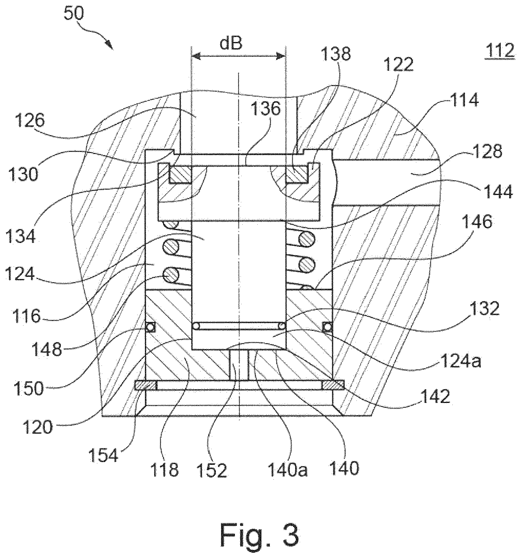

Fig. 3 zeigt ein Ausführungsbeispiel des erfindungsgemäßen Mindestdruckventils 50 gemäß

Fig. 2 in einer geöffneten Stellung.

Die Funktion des Mindestdruckventils 50 lässt sich nun folgendermaßen beschreiben:
Der Fluideintrittskanal 126 ist mit einer Druckseite des Schraubenkompressors 112 fluidverbunden.

Sobald der Betrieb des Schraubenkompressors 112 begonnen hat, strömt Druckluft von der Druckseite des Schraubenkompressors 112 in den Fluideintrittskanal 126 ein und beaufschlagt dort am Ventilsitz 130 die zum Fluideintrittskanal 126 gewandte Stirnseite des Ventilkolbens 122 mit Betriebsdruck.

Die aus dem jeweiligen Betriebsdruck und dem Ventilsitzdurchmesser dA resultierende Drucckraft muss zunächst mindestens insoweit ansteigen, bis sie die Summe der von der Schraubenfeder 148 auf den Ventilkolben 122 ausgeübte Federkraft, der Kreisringfläche dA-dB und der Reibungskraft zwischen dem Dichtungselement 132 übersteigt.

Solange dies nicht der Fall ist, befindet sich der Ventilkolben 122 in einer Schließstellung, derart, dass der Fluideintrittskanal 126 und der Fluidaustrittskanal 128 voneinander getrennt sind.

Übersteigt die Druckkraft (beispielsweise ab einem Betriebsdruck von ca. 10 bar) die Summe aus der Federkraft des Federelements 148, der Druckkraft resultierend aus der Ringfläche dA-dB und der Reibungskraft zwischen dem Dichtungselement 132 und dem Ventileinsatz 118, bewegt sich der Ventilkolben 122 axial in Richtung des Ventileinsatzes 118, in dem er mittels des Ventilkolbenendabschnitts 124a in der Ventilkolbenbohrung 120 axial verschieblich geführt ist.

Die axiale Verschiebung des Ventilkolbens 122 wird ab einer bestimmten, hauptsächlich vom Betriebsdruck abhängigen, Verschiebungslänge durch den axialen Anschlag 142 im teilweise geschlossenen Ende 140a der Ventilkolbenbohrung 120 begrenzt.

Insofern ist die axiale Verschiebung des freien Ventilkolbenendabschnitts 124a und des Ventilkolbens 122 mittels des axialen Anschlags 142 begrenzbar.

Sodann strömt die Druckluft von dem Fluideintrittskanal 126 über die Ventileinsatzöffnung 116 in den Fluidaustrittskanal 128 ein und kann dort weiteren pneumatischen Bauteilen (wie beispielsweise einer Luftaufbereitungseinrichtung) zugeführt werden.

Fällt der Betriebsdruck des Schraubenkompressor 112 unter denjenigen Wert, ab dem die Summe aus der Federkraft der Schraubenfeder 148 und der Druckkraft der Ringfläche dA-dB die Summe aus der Druckkraft am Ventilkolben 122 resultierend aus dem Durchmesser dB und der Reibungskraft zwischen dem Dichtungselement 132 und dem Ventileinsatz 118 übersteigt, bewegt sich der Ventilkolben 122 in Richtung des Ventilsitzes 130.

Der Ventilkolben 122 erreicht schließlich, nachdem die Axialdichtung 138 gegen den Ventilsitz 130 angestellt ist, seine Schließstellung.

Da die pneumatische Wirkfläche an der zum Fluideintrittskanal 126 zugewandten Stirnseite des Ventilkolbens 122 in seiner geöffneten Stellung kleiner als in seiner Schließstellung ist, unterscheidet sich (dieser Sachverhalt ist bei jedem Ventil dieser Bauart prinzipbedingt vorhanden) folglich der Öffnungsdruck vom Schließdruck.

Diese Diskrepanz, die als Hysteres bezeichnet wird, sollte nach Möglichkeit möglichst gering gehalten werden und kann insbesondere durch das Verhältnis Ventilkolbenabschnittsdurchmesser dB zu Ventilsitzdurchmesser dA derart eingestellt werden, dass sich die Hysterese auf Werte von ca. 1 bar, insbesondere ca. 0,5 bar und besonders bevorzugt ca. 0,2 bar bei einem Öffnungsdruck von ca. 10 bar senken lässt.

### BEZUGSZEICHENLISTE

- 10: Schraubenkompressor
- 12: Befestigungsflansch
- 14: Eingangswelle
- 16: Schraube
- 18: Schraube
- 20: Gehäuse
- 22: Öl
- 24: Einlassstutzen
- 26: Luftfilter
- 28: Lufteinlass
- 30: Ventileinsatz
- 32: Luftzuführkanal
- 34: Luftauslassrohr
- 36: Steigleitung
- 38: Temperaturfühler
- 40: Halter für ein Luftentölelement
- 42: Luftentölelement
- 44: Filtersieb bzw. bekannte Filter- bzw. Ölabscheidevorrichtungen
- 46: Luftausgangsöffnung
- 48: Rückschlagventil
- 50: Mindestdruckventil, Eck-Mindestdruckventil
- 51: Luftauslass
- 52: Steigleitung
- 54: Filter- und Rückschlagventil
- 56: Düse
- 58: Ölrückführleitung
- 59: Ölablassschraube
- 60: Ansatz
- 62: Ölfilter
- 64: Ölfiltereinlasskanal
- 66: Thermostatventil
- 68: Rückführleitung
- 70: Lager
- 72: Düse
- 74: Kühler, Wärmetauscher
- 76: Sicherheitsventil
- 78: Bypassleitung
- 80: Entlastungsventil
- 82: Öllevelsensor
- 112: Schraubenkompressor
- 114: (Ventil-)Gehäuse
- 116: Ventileinsatzöffnung
- 118: Ventileinsatz
- 120: Ventilkolbenbohrung
- 122: Ventilkolben
- 124: Ventilkolbenabschnitt
- 124a: freier Ventilkolbenendabschnitt
- 126: Fluideintrittskanal
- 128: Fluidaustrittskanal
- 130: Ventilsitz
- 132: Radialdichtung des freien Ventilkolbenendabschnitts
- 134: Erhebung des Ventilsitzes
- 136: Stirnfläche des Ventilkolbens
- 138: Axialdichtung des Ventilkolbens
- 140: Ende der Ventilkolbenbohrung
- 140a: teilweise geschlossenes Ende der Ventilkolbenbohrung
- 142: axialer Anschlag des Endes der Ventilkolbenbohrung
- 144: Federansatzfläche des Ventilkolbens
- 146: Federansatzfläche des Ventileinsatzes
- 148: Federelement, Schraubenfeder
- 150: Radialdichtung des Ventileinsatzes
- 152: Entlüftungsbohrung
- 154: axialer Sicherungsring
- dA: Ventilsitzdurchmesser
- dB: Ventilkolbenabschnittsdurchmesser

## Patentansprüche

1. Mindestdruckventil (50) für einen Kompressor, insbesondere Schraubenkompressor (10, 112) oder Rotary-Vane-Kompressor, für ein Fahrzeug, insbesondere ein Nutzfahrzeug, mit wenigstens einem Ventilgehäuse (114), mit wenigstens einer Ventileinsatzöffnung (116), die im Ventilgehäuse (114) ausgebildet ist, mit wenigstens einem Ventileinsatz (118), der in die Ventileinsatzöffnung (116) eingesetzt ist und wenigstens eine Ventilkolbenbohrung (120) aufweist, mit wenigstens einem Ventilkolben (122), der mit wenigstens einem Ventilkolbenabschnitt (124) im Ventileinsatz (118) in der Ventilkolbenbohrung (120) verschieblich geführt ist, mit wenigstens einem Fluideintrittskanal (126) und mit wenigstens einem Fluidaustrittskanal (128), wobei der Fluideintrittskanal (126) an seinem dem Ventilkolben (122) zugewandten Ende wenigstens einen Ventilsitz (130) aufweist, gegen den der Ventilkolben (122) zum Schließen des Mindestdruckventils (50) anstellbar ist, derart, dass der Fluideintrittskanal (126) und der Fluidaustrittskanal (128) in einer Schließstellung des Ventilkolbens (122) voneinander getrennt sind, wobei der Ventilsitz (130) einen Ventilsitzdurchmesser dA aufweist, wobei der Ventilkolbenabschnitt (124) einen Ventilkolbenabschnittsdurchmesser dB aufweist und wobei das Verhältnis Ventilkolbenabschnittsdurchmesser dB zu Ventilsitzdurchmesser dA zwischen ca. 0,7 und ca. 0,9, **dadurch gekennzeichnet, dass** der Ventilkolbenabschnitt (124), der im Ventileinsatz (118) in der Ventilkolbenbohrung (120) verschieblich geführt ist, ein freier Ventilkolbenendabschnitt (124a) ist; und ein Ende (140) der Ventilkolbenbohrung (120) einen axialen Anschlag (142) aufweist, mittels dessen die axiale Verschiebung des freien Ventilkolbenendabschnitts (124a) und des Ventilkolbens (122) begrenzbar ist.

2. Mindestdruckventil (50) nach Anspruch 1,
**dadurch gekennzeichnet, dass**
zwischen dem freien Ventilkolbenendabschnitt (124a) und der Ventilkolbenbohrung (120) wenigstens eine Dichtung (132), insbesondere eine Radialdichtung (132), vorgesehen ist.

3. Mindestdruckventil (50) nach Anspruch 2,
**dadurch gekennzeichnet, dass**
der freie Ventilkolbenendabschnitt (124a) eine zylindrische Form aufweist und in dessen Mantelfläche die Dichtung (132), insbesondere die Radialdichtung (132), angeordnet ist, die gegen die Ventilkolbenbohrung (120) angedrückt ist.

4. Mindestdruckventil (50) nach einem der vorhergehenden Ansprüche,
**dadurch gekennzeichnet, dass**
der Ventilsitz (130) eine umlaufende, insbesondere eine geschlossen umlaufende, Erhebung (134) aufweist.

5. Mindestdruckventil (50) nach einem der vorhergehenden Ansprüche,
**dadurch gekennzeichnet, dass**
der Ventilkolben (122) in seiner dem Fluideintrittskanal (126) zugewandten Stirnfläche (136) wenigstens eine Dichtung (138), insbesondere eine Axialdichtung (138), aufweist, die in der Schließstellung des Ventilkolbens (122) gegen den Ventilsitz (130) angestellt ist.

6. Mindestdruckventil (50) nach einem der vorhergehenden Ansprüche,
**dadurch gekennzeichnet, dass**
zwischen einer Federansatzfläche (144) des Ventilkolbens (122) und einer Federansatzfläche (146) des Ventileinsatzes (118) ein Federelement (148), insbesondere eine Schraubenfeder (148), angeordnet ist.

7. Mindestdruckventil (50) nach einem der vorhergehenden Ansprüche,
**dadurch gekennzeichnet, dass**
zwischen dem Ventileinsatz (118) und der Ventileinsatzöffnung (116) des Ventilgehäuses (114) wenigstens eine Dichtung (150), insbesondere eine Radialdichtung (150), vorgesehen ist.

8. Mindestdruckventil (50) nach einem der vorhergehenden Ansprüche,
**dadurch gekennzeichnet, dass**
der Ventileinsatz (118) eine zylindrische Außenkontur aufweist und in dessen Mantelfläche die Dichtung (150), insbesondere die Radialdichtung (150), angeordnet ist, die im montierten Zustand des Mindestdruckventils (50) gegen die Ventileinsatzöffnung (116) angedrückt ist.

9. Mindestdruckventil (50) nach einem der vorhergehenden Ansprüche,
**dadurch gekennzeichnet, dass**
der Ventileinsatz (118) eine Entlüftungsbohrung (152) aufweist, die sich von einer Außenoberfläche des Ventileinsatzes (118) zu dem Ende (140) der Ventilkolbenbohrung (120) erstreckt, das den axialen Anschlag (142) aufweist.

10. Mindestdruckventil (50) nach einem der vorhergehenden Ansprüche,
**dadurch gekennzeichnet, dass**
in einer Oberfläche der Ventileinsatzöffnung (118) ein axialer Anschlag (154), insbesondere ein axialer Sicherungsring (154), versehen ist, gegen den der Ventileinsatz (118) im montierten Zustand des Mindestdruckventils (50) axial angestellt ist.

11. Mindestdruckventil (50) nach einem der vorhergehenden Ansprüche,
**dadurch gekennzeichnet, dass**
das Ventilgehäuse (114) des Mindestdruckventils (50) als einstückiger Bestandteil eines Gehäuses (20) des Schraubenkompressors (10, 112) ausgebildet ist.

12. Mindestdruckventil (50) nach einem der vorhergehenden Ansprüche,
**dadurch gekennzeichnet, dass**
das Mindestdruckventil (50) als Eck-Mindestdruckventil (50) ausgeführt ist.

## Claims

1. Minimum pressure valve (50) for a compressor, in particular screw compressor (10, 112) or rotary vane compressor, for a vehicle, in particular a commercial vehicle, having at least one valve housing (114), having at least one valve insert opening (116) formed in the valve housing (114), having at least one valve insert (118), which is inserted into the valve insert opening (116) and which has at least one valve piston bore (120), having at least one valve piston (122) displaceably guided with at least one valve piston portion (124) in the valve insert (118) in the valve piston bore (120), having at least one fluid entry channel (126) and having at least one fluid exit channel (128), wherein the fluid entry channel (126) has, at its end facing toward the valve piston (122), at least one valve seat (130), against which the valve piston (122) can be brought into abutment in order to close the minimum pressure valve (50), such that the fluid entry channel (126) and the fluid exit channel (128) are separated from each other in a closed position of the valve piston (122), wherein the valve seat (130) has a valve seat diameter dA, wherein the valve piston portion (124) has a valve piston portion diameter dB, and wherein the ratio of valve piston portion diameter dB to valve seat diameter dA lies between approximately 0.7 and approximately 0.9,
**characterised in that**
the valve piston portion (124) displaceably guided in the valve insert (118) in the valve piston bore (120) is a free valve piston end portion (124a); and **in that** an end (140) of the valve piston bore (120) has an axial stop (142), by means of which the axial displacement of the free valve piston end portion (124a) and of the valve piston (122) can be limited.

2. Minimum pressure valve (50) according to claim 1.
**characterised in that**
at least one seal (132), in particular one radial seal (132), is provided between the free valve piston end portion (124a) and the valve piston bore (120).

3. Minimum pressure valve (50) according to claim 2.
**characterised in that**
the free valve piston end portion (124a) has a cylindrical form and the seal (132), in particular the radial seal (132), is located in the shell surface of said valve piston end portion, which seal is pushed against the valve piston bore (120).

4. Minimum pressure valve (50) according to any of the preceding claims,
**characterised in that**
the valve seat (130) has an encircling, in particular a continuously encircling, elevation (134).

5. Minimum pressure valve (50) according to any of the preceding claims,
**characterised in that**
the valve piston (122) has at least one seal (138), in particular one axial seal (138), in its end face (136) facing toward the fluid entry channel (126), which seal is brought into abutment against the valve seat (130) in the closed position of the valve piston (122).

6. Minimum pressure valve (50) according to any of the preceding claims,
**characterised in that**
a spring element (148), in particular a helical spring (148), is located between a spring engagement surface (144) of the valve piston (122) and a spring engagement surface (146) of the valve insert (118).

7. Minimum pressure valve (50) according to any of the preceding claims,
**characterised in that**
at least one seal (150), in particular one radial seal (150), is provided between the valve insert (118) and the valve insert opening (116) of the valve housing (114).

8. Minimum pressure valve (50) according to any of the preceding claims,
**characterised in that**
the valve insert (118) has a cylindrical outer contour and the seal (150), in particular the radial seal (150), is located in the shell surface of said valve insert, which seal is pushed against the valve insert opening (116) in the assembled state of the minimum pressure valve (50).

9. Minimum pressure valve (50) according to any of the preceding claims,
**characterised in that**
the valve insert (118) has a venting bore (152) extending from an outer surface of the valve insert (118) to the end (140), which has the axial stop (142), of the valve piston bore (120).

10. Minimum pressure valve (50) according to any of the preceding claims,
**characterised in that**
in a surface of the valve insert opening (118), there is provided an axial stop (154), in particular an axial circlip (154), against which the valve insert (118) is brought into abutment axially in the assembled state of the minimum pressure valve (50).

11. Minimum pressure valve (50) according to any of the preceding claims,
**characterised in that**
the valve housing (114) of the minimum pressure valve (50) is designed as an integral constituent part of a housing (20) of the screw compressor (10, 112).

12. Minimum pressure valve (50) according to any of the preceding claims,
**characterised in that**
the minimum pressure valve (50) is designed as a minimum pressure corner valve (50).

## Revendications

1. Soupape (50) à pression minimum pour un compresseur, notamment un compresseur (10, 112) à vis ou un compresseur rotatif à palettes, pour un véhicule, notamment un véhicule utilitaire, comprenant au moins un corps (114) de soupape, comprenant au moins une ouverture (116) d'insert de soupape, qui est constituée dans le corps (114) de la soupape, comprenant au moins un insert (118) de soupape, qui est inséré dans l'ouverture (116) d'insert de la soupape et a au moins un alésage (120) du piston de la soupape, comprenant au moins un piston (122) de soupape qui est guidé à coulissement par au moins une partie (124) du piston de la soupape de l'insert (118) de la soupape dans l'alésage (120) du piston de la soupape, comprenant au moins un conduit (126) d'entrée de fluide et au moins un conduit (128) de sortie de fluide, dans laquelle le conduit (126) d'entrée de fluide a à son extrémité tournée vers le piston (122) de la soupape au moins un siège (130) de soupape, sur lequel le piston (122) de la soupape peut être mis pour fermer la soupape (50) à pression minimum de manière à séparer l'un de l'autre le conduit (126) d'entrée de fluide et le conduit (128) de sortie de fluide dans une position de fermeture du piston (122) de la soupape, dans laquelle le siège (130) de la soupape a un diamètre dA de siège de soupape, dans laquelle la partie (124) du piston de la soupape a un diamètre dB de partie du piston de la soupape et dans laquelle le rapport diamètre dB de partie du piston de la soupape au diamètre dA du siège de la soupape est compris entre environ 0,7 et environ 0,9
**caractérisé en ce que** la partie (124) du piston de la soupape, qui est guidée à coulissement dans l'insert (118) de soupape dans l'alésage (120) du piston de la soupape est une partie (124a) libre d'extrémité du piston de la soupape et une extrémité (140) de l'alésage (120) du piston de la soupape a une butée (142) axiale, au moyen de laquelle le déplacement axial de la partie (124a) libre d'extrémité de piston de la soupape et du piston (122) de la soupape peut être limité.

2. Soupape (50) de pression minimum suivant la revendication 1,
**caractérisée en ce que**
entre la partie (124a) libre d'extrémité du piston de la soupape et l'alésage (120) du piston de la soupape est prévue au moins une étanchéité (132), notamment une étanchéité (132) radiale.

3. Soupape (50) à pression minimum suivant la revendication 2,
**caractérisée en ce que**
la partie (124a) libre d'extrémité du piston de la soupape a une forme cylindrique et dans sa surface latérale l'étanchéité (132), notamment l'étanchéité (132) radiale, est disposée en étant appliquée sur l'alésage (120) du piston de la soupape.

4. Soupape (50) à pression minimum suivant l'une des revendications précédentes,
**caractérisée en ce que**
le siège (130) de la soupape a une surélévation (134) faisant le tour, notamment faisant le tour en étant fermée.

5. Soupape (50) à pression minimum suivant l'une des revendications précédentes,
**caractérisée en ce que**
le piston (122) de la soupape a dans sa surface (136) frontale, tournée vers le conduit (126) d'entrée de fluide, au moins une étanchéité (138), notamment une étanchéité (138) axiale, qui, dans la position de fermeture du piston (122) de la soupape vient sur le siège (130) de la soupape.

6. Soupape (50) à pression minimum suivant l'une des revendications précédentes,
**caractérisée en ce que**
un élément (148) de ressort, notamment un ressort (148) hélicoïdal, est monté entre une surface (134) d'application d'un ressort du piston (122) de la soupape et une surface (146) d'application d'un ressort de l'insert (118) de la soupape.

7. Soupape (50) à pression minimum suivant l'une des revendications précédentes,
**caractérisée en ce que**
il est prévu au moins une étanchéité (150), notamment une étanchéité (150) radiale, entre l'insert (118) de la soupape et l'ouverture (116) d'insert de la soupape du corps (114) de la soupape.

8. Soupape (50) à pression minimum suivant l'une des revendications précédentes,
**caractérisée en ce que**
l'insert (118) de la soupape a un contour extérieur cylindrique et dans sa surface latérale est disposée l'étanchéité (150), notamment l'étanchéité (150) radiale, qui, lorsque la soupape (50) à pression minimum est à l'état monté, s'applique sur l'ouverture (116) d'insert de la soupape.

9. Soupape (50) à pression minimum suivant l'une des revendications précédentes,
**caractérisée en ce que**
l'insert (118) de la soupape a un trou (152) de purge qui s'étend d'une surface extérieure de l'insert (118) de la soupape à une extrémité (140) de l'alésage (120) du piston de la soupape, l'extrémité (140) ayant la butée (142) axiale.

10. Soupape (50) à pression minimum suivant l'une des revendications précédentes,
**caractérisée en ce que**
il est prévu dans une surface de l'ouverture (118) d'insert de la soupape une butée (154) axiale, notamment une bague (154) axiale de sécurité, sur laquelle l'insert (118) de la soupape est appliqué axialement lorsque la soupape (50) à pression minimum est à l'état monté.

11. Soupape (50) à pression minimum suivant l'une des revendications précédentes,
**caractérisée en ce que**
le corps (114) de la soupape (50) à pression minimum est constitué sous la forme d'une partie constitutive en une seule pièce d'une enveloppe (20) du compresseur (10 ; 112) à vis.

12. Soupape (50) à pression minimum suivant l'une des revendications précédentes,
**caractérisée en ce que**
la soupape (50) à pression minimum est réalisée sous la forme d'une soupape à pression minimum d'équerre.
